# EUROPEAN PATENT APPLICATION

(11) **EP 2 354 880 A1**
(43) Date of publication of application: **10.08.2011**
(21) Application number: 10152617.6
(22) Date of filing: 04.02.2010
(51) Int. Cl.: G05D 23/13

(54) **Temperature controlled valve core**

(71) Applicant: Globe Union Industrial Corp., Taichung (TW)
(72) Inventor: Yuan, Chia-Hua, Taichung (TW)
(74) Representative: Chaillot, Geneviève

(57) **Abstract**

A temperature controlled valve core comprises a housing including a first and a second tunnels, and a channel; a seat and an adjusting assembly installed in the housing; a rotating component of the adjusting assembly is rotated to actuate a watering valve to move upward and downward to engage with or disengage from the seat to open or close a watering outlet to actuate a heat sensitive element to push an inlet valve to move downward, closing a second intake; and when the watering valve moves upward, an elastic returning element pushes the inlet valve to move upward to close a first intake; the heat sensitive element sense a temperature of mixed cold and hot water to expand or retract a plunger to adjust sizes of the first and the second intakes to maintain the temperature of the mixed cold and hot water at a stable temperature.

## Description

### BACKGROUND OF THE INVENTION

### Field of the Invention

The present invention relates to a temperature controlled valve core that can utilize a single rotating component to open and close water supply, and to adjust temperature at a stable range.

### Description of the Prior Art

Conventional temperature controlled valve core is used to supply water at a stable temperature by changing temperature or/and pressure of cold and hot waters, accordingly a heat sensitive element is provided to adjust the temperature of mixed cold and hot water to keep the temperature at a stable status.

A temperature adjustable valve core disclosed in Publication No. 20080035744 comprises temperature adjusting assembly including a flow amount adjusting component and a temperature adjusting component to control flowing amount and temperature individually. The flow amount adjusting component is used to rotably actuate a movable disc and a fixed disc relative to the movable disc to act so that a first tunnel to flow hot fluid, a second tunnel to flow cold fluid, and a third tunnel to flow mixed cold and hot water move at opposite positions to change communicating state with each other. The temperature adjusting component is applied an adjustable screw to axially actuate a heat sensitive element and an upper sliding valve to change flowing amount of the mixed cold and hot water in a chamber. The heat sensitive element includes a heat sensing portion disposed on a flowing path of the mixed cold and hot water to sense the temperature of the flowing water, such that a plunger on one end of the heat sensitive element expands and retracts to actuate the sliding valve to move axially so as to adjust flowing amount of the mixed cold and hot water in the chamber automatically, thus obtaining a stable temperature.

However, such an operating process is complicated and time consuming that user will feel confused. Besides, some users may only operate the temperature adjusting component and then feel confused because the mixed cold and hot water does not flow outward, and because after operating the flow amount adjusting component, the temperature adjusting component has to be operated once more, some users will feel troublesome to abandon using the temperature adjusting function. Furthermore, when the temperature adjusting component is set at a higher or lower temperature, a scald or frostbite will happen.

The present invention has arisen to mitigate and/or obviate the afore-described disadvantages.

### SUMMARY OF THE INVENTION

The primary object of the present invention is to provide a temperature controlled valve core that can utilize a single rotating component to open and close water supply, and to adjust temperature at a stable range.

Another object of the present invention is to provide a temperature controlled valve core that can if the cold water stops supply, the temperature of the mixed cold and hot water raises at instant, then the sensing portion of the plunger of the heat sensitive element senses the raised temperature of the mixed cold and hot water to expand the plunger quickly so that the inlet valve is pushed by the plunger adversely to move downward to close the second intake, obtaining anti-scald safety.

A temperature controlled valve core in accordance with a preferred embodiment of the present invention comprises:
a housing including a receiving space defined therein, and including a first tunnel to flow cold water axially extending on a first peripheral fence, including a second tunnel to flow hot water, and a channel to flow mixed cold and hot water; the first tunnel extending upward from a bottom end of the housing toward a first height to communicate with the receiving space; the second tunnel extending upward from the bottom end of the housing toward a second height; the first height is higher than the second height; the channel extending upward from the bottom end of the housing to be over the first height so as to communicate with the receiving space;
a seat received in a predetermined position of the receiving space of the housing, and including a first chamber to receive mixed cold and hot water arranged therein to communicate with the channel of the lower housing part;
an adjusting assembly installed between the housing and the seat, and including:
   a rotating component limited to rotate on a top end of the housing;
   a watering valve actuated by the rotating component to move upward and downward, and having a resilient protecting element installed therein, and having a pushing element pushed downward by the resilient protecting element; the watering valve being actuated to move downward so as to close a watering outlet, and when the watering valve is actuated to move upward, the watering outlet is opened;
   an inlet valve received at a predetermined portion of the receiving space of the housing, and having a second chamber to flow hot water arranged on a lower side thereof to communicate with the first chamber of the seat, and to communicate with a top end of the second tunnel via a second intake so as to flow hot water, and to communicate with a top end of the first tunnel via a first intake so as to flow cold water; the inlet valve allowing to be actuated to move upward and downward, when the inlet valve is pushed to move downward, the second intake is closed, and the first intake is opened; when the inlet valve is pushed to move upward, the second intake is opened so that the first intake becomes decreased until it is closed completely; the inlet valve is moved upward and downward to adjust a mixing ratio of cold and hot waters from the first intake and the second intake, and the cold and the hot waters are mixed in a top end of the second chamber to flow toward the fist chamber;
   a heat sensitive element engaging with the inlet valve and the pushing element of the watering valve respectively so as to transmit an axial pushing force from the pushing element to the inlet valve, so that the heat sensitive element moves downward to sense a temperature of the mixed cold and hot water which flows to the first chamber, and the heat sensitive element automatically expands to push the inlet valve to move downward based on a sensed temperature, or the heat sensitive element is forced to retract;
   an elastic returning element engaging with a bottom end of the inlet valve and the receiving space of the housing so that when the watering valve is actuated to move upward, and the inlet valve is pushed to move upward to push the heat sensitive element to retract, and a resilient coefficient of the elastic returning element being larger than that of the resilient protecting element.

### BRIEF DESCRIPTION OF THE DRAWINGS

Fig. 1 is a perspective view showing the assembly of a temperature controlled valve core according to a preferred embodiment of the present invention;
Fig. 2 is a perspective view showing the exploded components of the temperature controlled valve core according to the preferred embodiment of the present invention;
Fig. 3 is a cross sectional view showing the assembly of the temperature controlled valve core according to the preferred embodiment of the present invention;
Fig. 4 is a perspective view showing a longitudinal cross section of a housing of the temperature controlled valve core in accordance with the preferred embodiment of the present invention;
Fig. 5 is another perspective view showing a longitudinal cross section of the housing of the temperature controlled valve core in accordance with the preferred embodiment of the present invention;
Fig. 6 is a perspective view showing a horizontal cross section of the housing of the temperature controlled valve core in accordance with the preferred embodiment of the present invention;
Fig. 7 is another perspective view showing a horizontal cross section of the housing of the temperature controlled valve core in accordance with the preferred embodiment of the present invention;
Fig. 8 is a perspective view showing a cross section of an upper housing part of the temperature controlled valve core in accordance with the preferred embodiment of the present invention;
Fig. 9 is a perspective view showing a cross section of a seat of the temperature controlled valve core in accordance with the preferred embodiment of the present invention;
Fig. 10 is a perspective view showing a horizontal cross section of the seat of the temperature controlled valve core in accordance with the preferred embodiment of the present invention;
Fig. 11 is a perspective view showing a cross section of a rotating component and a watering valve of the temperature controlled valve core in accordance with the preferred embodiment of the present invention;
Fig. 12 is a perspective view showing a cross section of an inlet valve of the temperature controlled valve core in accordance with the preferred embodiment of the present invention;
Fig. 13 is a cross sectional view showing a part of the temperature controlled valve core in accordance with the preferred embodiment of the present invention;
Fig. 14 is a cross sectional view showing the operation of the temperature controlled valve core in accordance with the preferred embodiment of the present invention;
Fig. 15 is another cross sectional view showing the operation of the temperature controlled valve core in accordance with the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

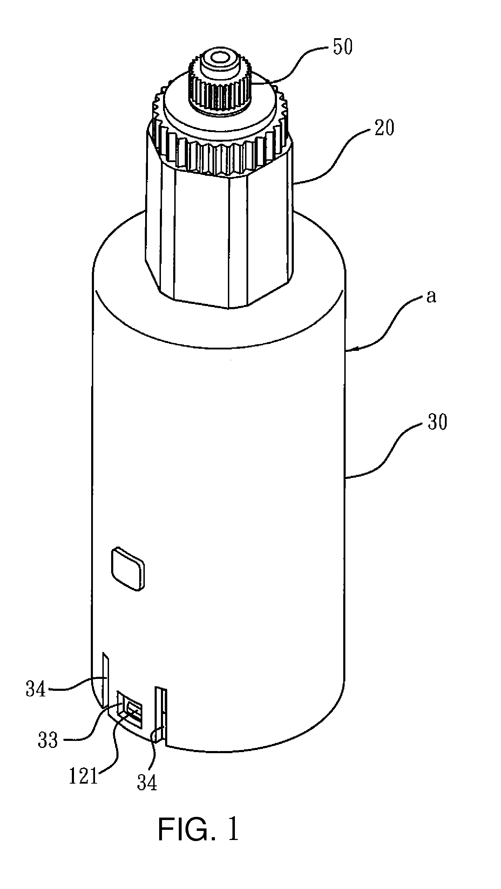

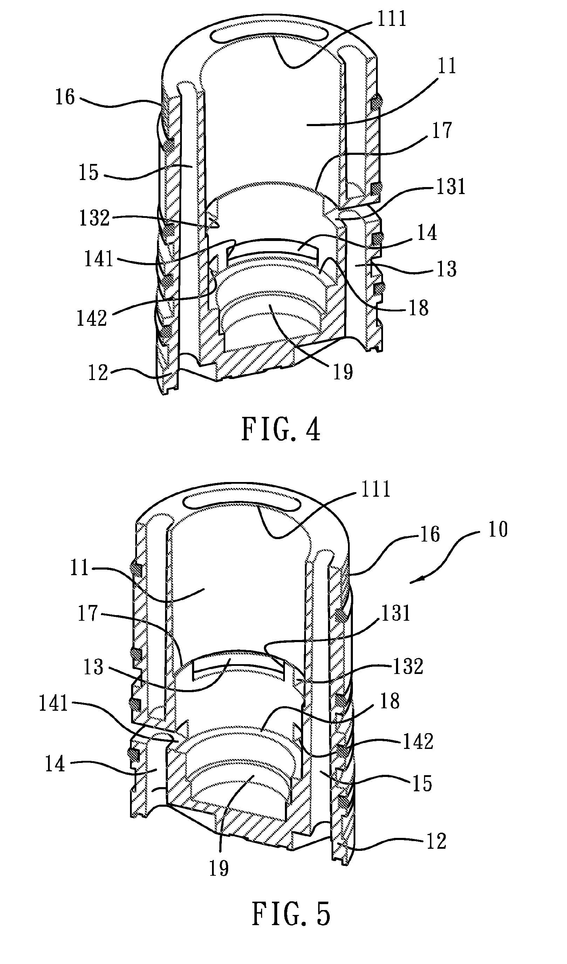

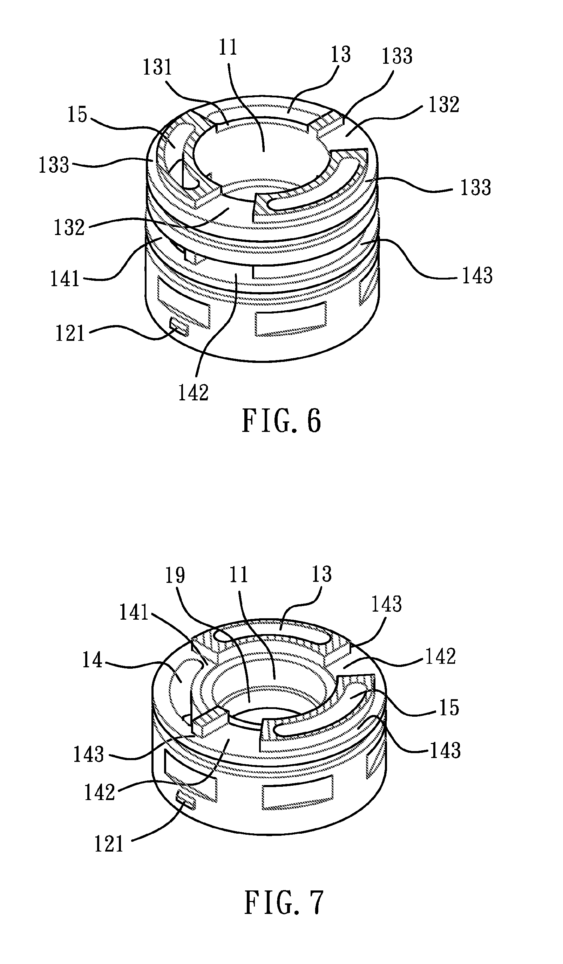

Referring to Figs. 1-3, a temperature controlled valve core according to a preferred embodiment of the present invention comprises a housing a, a seat b, and an adjusting assembly c;
the housing a including a lower housing part 10, an upper housing part 20 sealed to a top end of the lower housing part 10, and a casing 30 sealed to the lower housing part 10 and a partial exterior of the upper housing part 20, the housing a also including a receiving space defined in a partial interior thereof, wherein
the lower housing part 10 as shown in Figs. 4-7 is formed in a cylinder shape, and includes a first room 11 with a first opening 111 facing upward, and includes a first tunnel 13 to flow cold water axially extending on a first peripheral fence 12, includes a second tunnel 14 to flow hot water, and a channel 15 to flow mixed cold and hot water;
the first tunnel 13 extends upward to a first height from a bottom end of the lower housing part 10, and communicates with the first room 11 through a first orifice 131 which passes through the first peripheral fence 12. In this embodiment, the first tunnel 13 communicates with the first room 11 via two second orifices 132 which pass through the first peripheral fence 12, and between the first and the second orifices 131, 132 is defined a ditch 133 to communicate with the first and the second orifices 131, 132 so that cold water from a top end of the first tunnel 13 flows to the first and the second orifices 131, 132 and further flows into the first room 11 evenly.

The second tunnel 14 extends upward from the bottom end of the lower housing part 10 to a second height, and then communicates with the first room 11 via a third orifice 141 which passes through the first peripheral fence 12. In this embodiment, the second tunnel 14 extends upward from the bottom end of the lower housing part 10 to the second height via two fourth orifices 142 which pass through the first peripheral fence 12, and between the third and the fourth orifices 141, 142 is defined a trench 143 to communicate with the third and the fourth orifices 141, 142 so that hot water from a top end of the second tunnel 14 flows to the first room 11 evenly from the third and the fourth orifices 141, 142.

The first height where the top end of the first tunnel 13 is located is higher than the second height where the top end of the second tunnel 14 is located, e.g., cold water flows inward from a higher position of the first room 11, and hot water flows inward from a lower position thereof.

The channel 15 extends to the top end of the lower housing part 10 from the bottom end of the lower housing part 10 so that the mixed cold and hot water from a top end of the channel 15 flows downward.

The lower housing part 10 includes first outer threads 16 formed on an outer surface of the top end thereof, and the first room 11 includes a fixing fringe 17 formed on an inner surface thereof where is located at top ends of the first and the second orifices 131, 132, and includes an enclosure tab 18 fixed on the inner surface thereof where is located at bottom ends of the third and the fourth orifices 141, 142, and includes a first positioning notch 19 disposed on a bottom end thereof.

The lower housing part 10 includes two engaging members 121 symmetrically secured on a lower side thereof proximate to an outer side of the first peripheral fence 12.

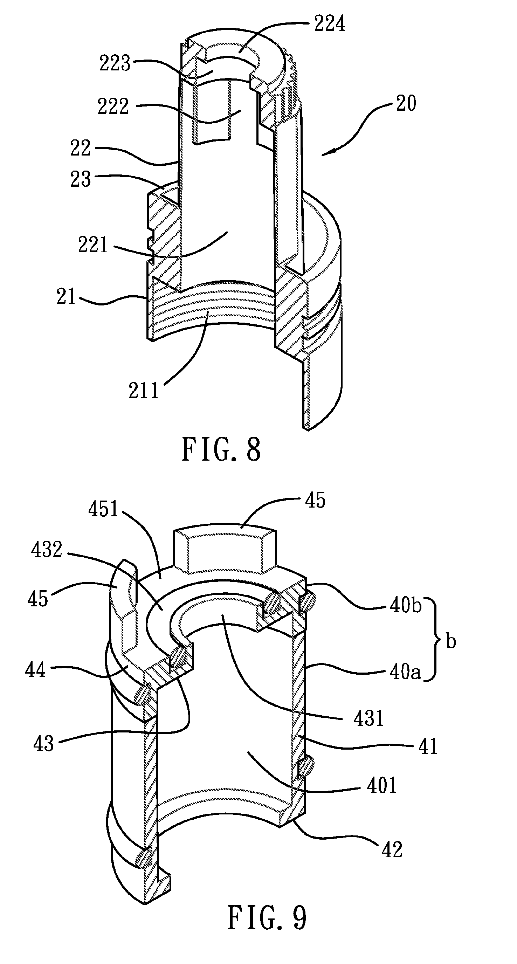

The upper housing part 20 as illustrated in Fig. 8 is formed in a sleeve shape, and includes a larger-diameter screwing portion 21 mounted on a lower side thereof, and includes a smaller-diameter receiving segment 22 arranged on an upper side thereof, and includes a stepped abutting shoulder 23 formed on an exterior thereof, the screwing portion 21 includes inner threads 211 attached in an interior thereof to screw with the first outer threads 16 of the lower housing part 10. The receiving segment 22 includes a second room 221 formed therein, and the second room 221 includes a number of protrusions extending around an inner surface of an upper side thereof to define a defining trough 222 between each two protrusions, and includes a mouth 223 with a smaller diameter disposed on a top end thereof, the mouth 223 includes a first hole 224 mounted on a top surface thereof.

An outer peripheral surface of the receiving segment 22 is polygonal to fit a specific tool and be rotated by the tool.

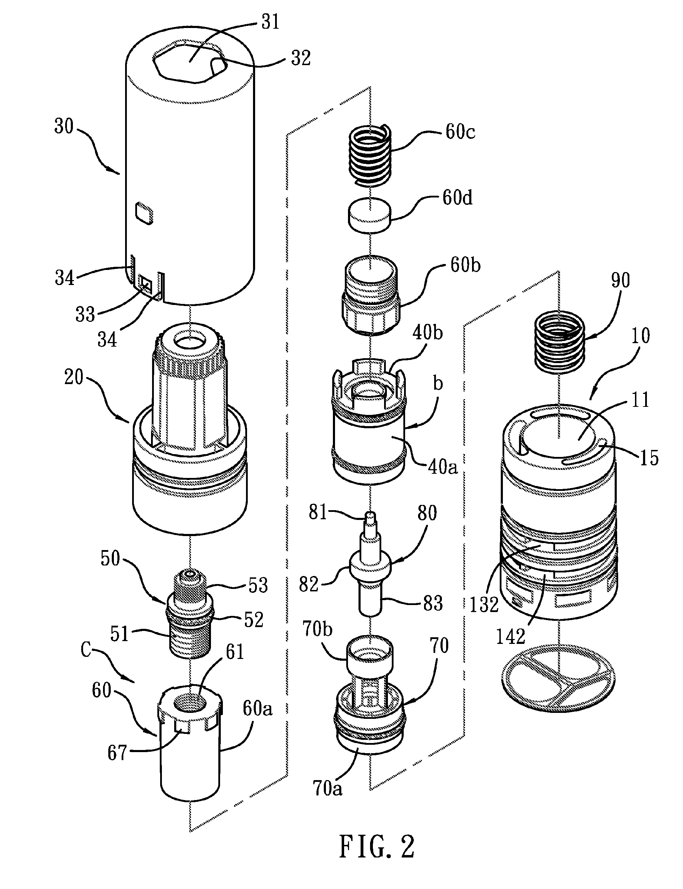

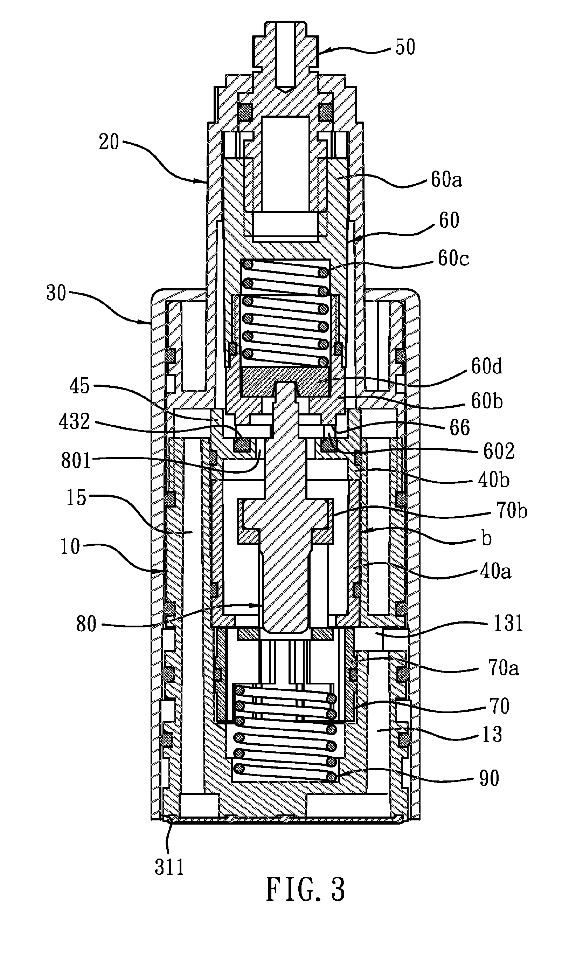

The casing 30 as shown in Figs. 2 and 3 is formed in a cover shape, and includes an internal area 31 having a second opening 311, and includes a second hole 32 fixed on a top surface thereof to inert the receiving segment 22 of the upper housing part 20 upward so that the casing 30 fits to the screwing portion 21 of the upper housing part 20 and the lower housing part 10 and to close an outer peripheral surface of the lower housing part 20 so that the first and the second orifices 131, 132 of the first tunnel 13 of the lower housing part 20 and the third and the fourth orifices 141, 142 of the second tunnel 14 are closed to flow the cold water and the hot water toward the first room 11.

The casing 30 further includes two retaining recesses 33 fixed at two symmetrical positions of a bottom end thereof respectively, and each recess 33 includes two slots 34 formed on two sides thereof so that the casing 30 covers to a part of the upper housing part 20 and the lower housing part 10, and a top surface of the internal area 31 engages with the abutting shoulder 23 of the screwing portion 21 of the upper housing part 20, the retaining recesses 33 engage with the engaging members 121, thus closing the lower and the upper housing parts 10, 20 tightly.

The receiving space of the housing a is comprised of the first room 11 of the lower housing part 10, the second room 221 of the upper housing part 20, and the screwing portion 21 of the upper housing part 20.

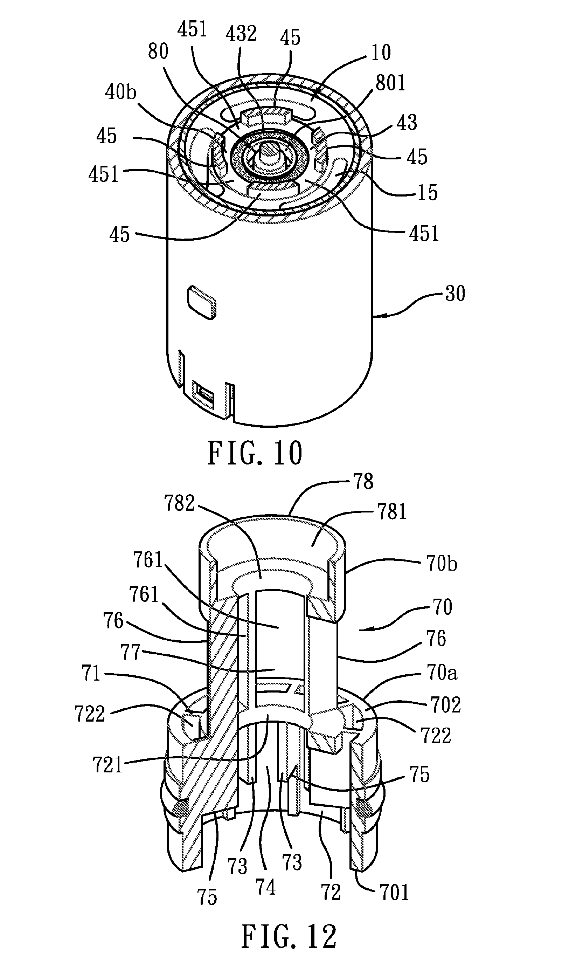

The seat b as shown in Figs. 9, 10 is positioned to an upper side of the first room 11 of the lower housing part 10, and includes a first chamber 401 to receive mixed cold and hot water arranged therein to communicate with the channel 15 of the lower housing part 10. In this embodiment of the present invention, the seat b includes an outer periphery 40a and a locking loop 40b, wherein
the outer periphery 40a is formed in a circular loop and fixed on the upper side of the first room 11 of the lower housing part 10, and a bottom end of a first peripheral side 41 thereof engages with the fixing fringe 17 of the lower housing part 10, the peripheral side 41 of the outer periphery 40a includes a first bottom rim 42 secured around the bottom end thereof, and the outer periphery 40a allows to define most part of the first chamber 401 by using an inner space thereof.

The locking loop 40b includes a first top cliff 43 and a second peripheral side 44 extending downward, the second peripheral side 44 couples with the outer periphery 40a. A top surface of the first top cliff 43 flushes with the top end of the lower housing part 10, and includes a plurality of biasing members 45 secured thereon, and between each two biasing members 45 is defined a cutout 451, and a top end of the biasing member 45 is screwed with the screwing portion 21 of the upper housing part 20 to be abutted downward so that the seat b is positioned between the first room 11 of the lower housing part 10 and the screwing portion 21 of the upper housing part 20 securely.

Because the top surface of the first top cliff 43 flushes with the top end of the lower housing part 10, when the upper housing part 20 engages with the biasing members 45, a distance between the interior of the screwing portion 21 and the top end of the lower housing part 10 is formed to supply water so that the cutout 451 is in communication with the top end of the channel 15.

The first top cliff 43 includes a first bore 431 disposed on a central portion thereof, and between the first bore 431 and the top cutout 451 is defined a first closing portion 432. In this embodiment, the first closing portion 432 is comprised of a stop pad retained in an annular indention of the top surface of the first top cliff 43.

The locking loop 40b allows to define a small part of the first chamber 401 by using a space between a lower side of the first top cliff 43 and the second peripheral side 44, the first chamber 401 communicates with the channel 15 via the first bore 431 and the cutouts 451.

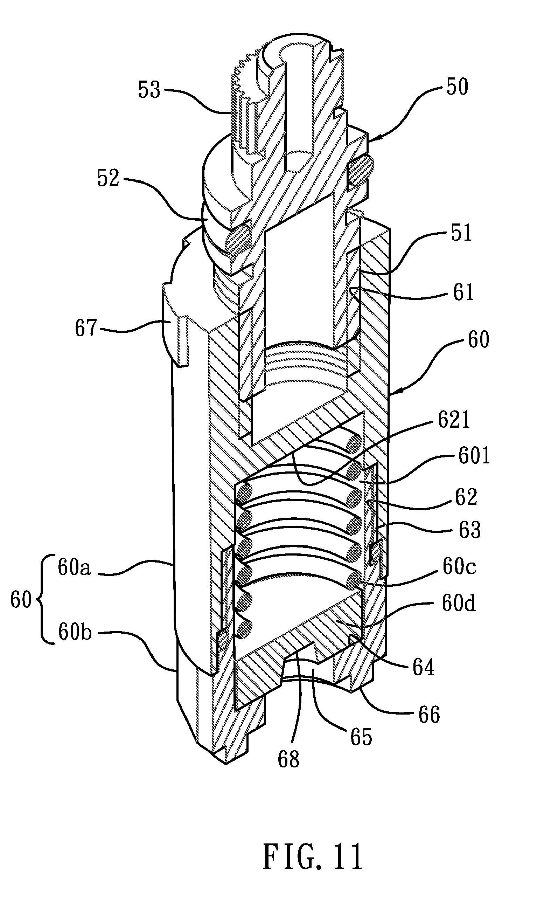

The adjusting assembly c as illustrated in Figs. 11-13 is installed between the housing a and the seat b, and includes a rotating component 50, a watering valve 60, an inlet valve 70, a heat sensitive element 80, and an elastic returning element 90, wherein

The rotating component 50 is formed in a shaft shape, and includes second outer threads 51 arranged on a bottom end thereof, and includes a sealing portion 52 fixed on a middle section thereof, and a rotary shaft 53 disposed on a top end thereof. The rotary shaft 53 extends out of the first hole 224 of the upper housing part 20 to be rotated. The sealing portion 52 is rotatably retained to the mouth 223 so that the rotating component 50 is driven to rotate on the top end of the upper housing part 20.

The watering valve 60 is actuated by the rotating component 50 to move upward and downward.

The watering valve 60 includes an actuating member 60a, a seal sleeve 60b, a resilient protecting element 60c, and a pushing element 60d.

The actuating member 60a includes a first and a second screwing grooves 61, 62 mounted on a top and a bottom ends thereof individually, and the first screwing groove 61 screws with the second threads 51 of the adjusting component 50, the second screwing groove 62 includes a second positioning notch 621 defined on an upper side thereof.

The seal slave 60b includes third threads 63 mounted on a top end thereof to screw with the second screwing groove 62 of the actuating member 60a, and includes a third positioning notch 64 arranged therein, and the third positioning notch 64 includes a second bore 65 fixed on a center of a bottom end thereof, the seal sleeve 60b includes a raised second closing portion 66 extending from a bottom surface thereof.

Between the second positioning notch 621 of the actuating member 60a and the third positioning notch 64 of the seal sleeve 60b is defined a cavity 601.

The actuating member 60a includes a number of limiting blocks 67 extending around the top end thereof to engage with the defining troughs 222 of the second room 221 of the upper housing part 20 so that the actuating member 60a is limited to rotate, hence when the rotating component 50 is rotated, the actuating member 60a is actuated to move upward and downward.

The resilient protecting element 60c is a compression spring to be installed in the cavity 601 of the watering valve 60, and a top end of the resilient protecting element 60a retains with the second positioning notch 621 of the actuating member 60a.

The pushing element 60d is installed to the third positioning notch 64 of the watering valve 60, and a top end of the pushing element 60d abuts against a bottom end of the resilient protecting element 60c, a bottom end of the pushing element 60d engages with the third positioning notch 64 of the seal sleeve 60b, and the pushing element 60d includes an aperture 60 disposed on a center thereof.

The watering valve 60 is actuated to move downward so that the second closing portion 66 of the seal sleeve 60b engages with the first closing portion 432 of the locking loop 40b of the seat b, and watering paths between the first bore 431 and the cutouts 451 are closed. On the contrary, when the watering valve 60 is actuated to move upward, the second closing portion 66 disengages from the first closing portion 432 to generate a watering outlet 602, as shown in Fig. 3, the mixed cold and hot water from the first chamber 401 flows to the top end of the channel 15 through the first bore 431, the watering outlet 602, and the cutouts 451.

The inlet valve 70 is received in a middle area of the first room 11 of the lower housing part 10 to move upward and downward so as to control flowing amount of the cold water and the hot water flowing from the top end of the first tunnel 13, and the top end of the second tunnel 14, and the first room 11 of the lower housing part 10.

The inlet valve 70 includes a third closing portion 70a and a fitting portion 70b, wherein:
the third closing portion 70a is received in the lower housing part 10 where is located at a lower area of the first room 11 of the seat b, and includes a stepped portion 71 defined between the third closing portion 70a and the fitting portion 70b, and includes a second chamber 72 to receive hot water formed on a bottom end thereof, the second chamber 72 includes a central hole 721 and a plurality of side bores 722 disposed on a center and a top surface thereof respectively, and includes a number of guiding wings 73 extending from an inner surface thereof so that between each two guiding wings 72 is defined a passage 74 to communicate with the side bores 722, and the guiding wing 73 includes a fourth positioning notch 75 arranged on a bottom end thereof.

The fitting portion 70b is received in the first chamber 401 of the seat b, and includes a number of reinforced ribs 76 extending upward from a top surface between the central hole 721 and the side bores 722, and between each two abutting reinforced ribs 76 is defined a fifth orifice 761, and among the reinforce ribs 76 is defined a second room 77 so that the second chamber 72 communicates with the first chamber 401 of the seat b through the central hole 721 and the side bores 722.

The fitting portion 70b includes a holder 78 connected on a top end thereof, and the holder 78 includes a dent 781 disposed on a top end thereof, the dent 781 includes a gap 782 mounted on a center of a bottom end thereof to communicate with the second room 77.

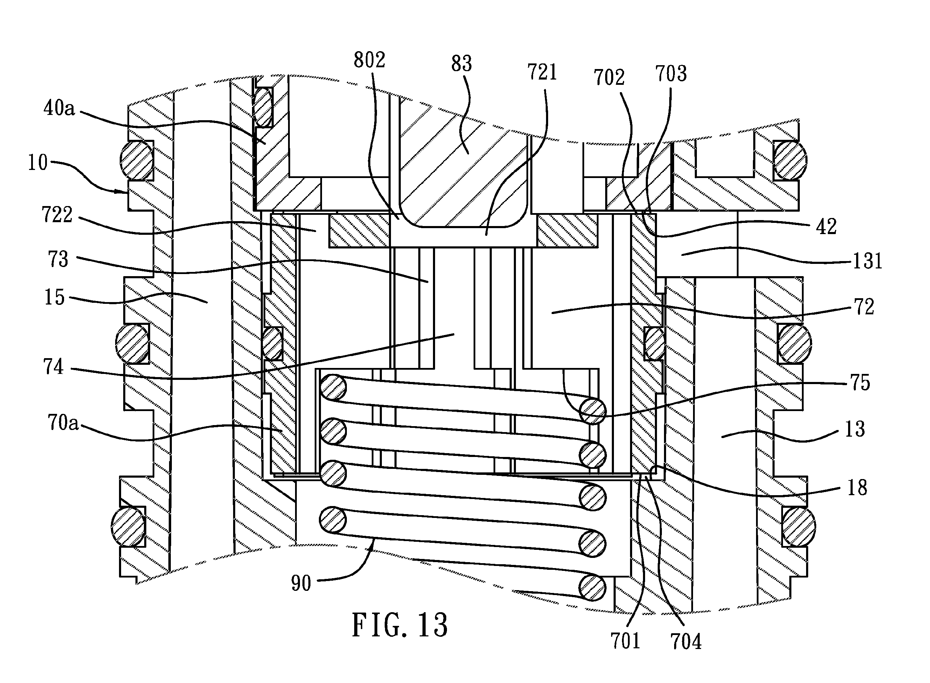

The inlet valve 70 is pushed to move downward so that the second bottom rim 701 of the third closing portion 70a engages with the enclosure tab 18 to close the third and the fourth orifices 141, 142 of the second tunnel 14 and the second chamber 72, the second top wall 702 of the stepped portion 71 disengages from the first bottom rim 42 of the outer periphery 40a, and a first intake 703 to flow cold water is opened as shown in Fig. 13 so that the cold water from the top end of the first tunnel 13 flows to the first chamber 401 via the first and the second orifices 131, 132 and the first intake 703. In contrast, when the inlet valve 70 is moved upward, the second bottom rim 701 of the third closing portion 70a disengages from the enclosure tab 18 of the lower housing part 10 until a second intake 704 to flow hot water is opened as illustrated in Fig. 13 so that hot water from the top end of the second tunnel 14 flows to the second chamber 72 through the third and the fourth orifices 141, 142 and the second intake 704, and the second top wall 702 of the stepped portion 71 moves close to the first bottom rim 42 of the outer periphery 40a until they are engaged with each other to close the first intake 703. Thereby, the inlet valve 70 is moved upward and downward to adjust a mixing ratio of the cold and the hot waters in the first chamber 401, thus controlling water temperature.

The heat sensitive element 80 is formed in a shaft shape, and includes a plunger 81 mounted on a top end thereof to expand and retract axially, and includes an annular projection 82 fixed on a middle section thereof to be positioned in the dent 781 of the inlet valve 70, and includes a heat sensing portion 83 secured on a bottom end thereof.

The plunger 81 retains with the aperture 68 of the pushing element 60d of the watering valve 60 to transmit an axially downward action from the pushing element 60d toward the inlet valve 70 so that the inlet valve 70 is pushed to move downward.

The sensing portion 83 is inserted to the second room 77 through the gap 782 of the inlet valve 70 so as to sense the temperature of the mixed cold and hot water flowing to the first chamber 401, and when the temperature of the mixed cold and hot water becomes high, the plunger 81 expands to push the inlet valve 70 to move downward so as to lower inflow amount of the hot water, thus changing mixing ratio of the cold and the hot water. On the contrary, when the senescing portion 83 senses the temperature of the mixed cold and hot water becomes lower, the plunger 81 is forced to retract downward.

The heat sensitive element 80 includes a heat inflatable material filled therein, such as bees wax, to push the plunger 81 to expand when it is inflated by heat, and when the heat sensitive element 80 is cold, the plunger 81 retracts inward by an external force.

The heat sensitive element 80 is spaced a suitable distance apart from the second bore 65 of the watering valve 60, thereby a first slit 801 is defined as shown in Fig. 10, so as to flow the mixed cold and hot water from the first chamber 401 to the cutouts 451.

Then the heat sensitive element 80 is installed, its bottom end is inserted to the central hole 721 of the inlet valve 70 slightly, and leaves a suitable distance from an inner surface of the central hole 721 to generate a second slit 802 as shown in Fig. 13 so that partial hot water in the second chamber 72 flows to the first chamber 401 via the second slit 802, the second room 77, and the firth orifices 761.

The outer periphery 40a is included in the side bores 722 of the inlet valve 70 so that cold water from the first and the second orifices 131, 132 and hot water from the side bores 722 are mixed together on upper sides of the side bores 722, and then are guided to bottom ends of the fifth orifices 761 to further mix with hot water from the first slit 801, and to flow upward along the fifth orifices 761 of the heat sensing portion 83 of the heat sensitive element 80 and finally to flow into the first chamber 401, wherein the mixed cold and hot water is guided to flow through the heat sensing portion 83, thus being sensed precisely.

The elastic returning element 90 is a compression spring, and installed to a lower area of the first room 11 of the lower housing part 10, and a bottom end of the elastic returning element 90 engages with the first positioning notch 19 of the first room 11, and a top end of the elastic returning element 90 engages with the fourth positioning notch 75 of the inlet valve 70 so that the inlet valve 70 is pushed upward by the elastic returning element 90 to enhance inflow amount; and the inlet valve 70 remains still in the watering valve 60 as well, but when the sensing portion 83 of the heat sensitive element 80 senses the temperature of the mixed cold and cold water decreased, the inlet valve 70 is pushed to move upward, and the plunger 81 is pressed inward so that the plunger 81 and the pushing element 60d contacts with each other, and the inflow amount of the hot water is enhanced to change mixing ratio of the cold and the hot waters.

The resilient protecting element 60c is used to compress the heat sensitive element 80 and the inlet valve 70 to prevent the heat sensitive element 80 and the inlet valve 70 from damage, when the second bottom rim 701 of the inlet valve 70 engages with the enclosure tab 18 of the lower housing part 10, and plunger 81 of the heat sensitive element 80 expands because the sensing portion 83 senses the temperature of the mixed cold and hot water becomes higher. Therefore, the resilient protecting element 60c dose not provide any resilient compressing function to prevent the plunger 81 from being pressed, and the heat sensitive element 80 can not push the inlet valve 70 to move downward to adjust supply ratio of the cold and the hot water automatically, hence a resilient coefficient of the resilient protecting element 60c has to be set larger than that of the elastic returning element 90.

The temperature controlled valve core of the present invention is installed to a watering device of a faucet, and an operating lever can be assembled to the rotary shaft 53 of the rotating component 50 so that the watering valve 60 and the inlet valve 70 are actuated to control water supply and the temperature of the mixed cold and hot water.

In operation, the second closing portion 66 of the seal sleeve 60b engages with the first closing portion 432 of the locking loop 40b so as to close the watering outlet 602, and the mixed cold and hot water in the first chamber 401 can not flow to the channel 15, thus closing water supply.

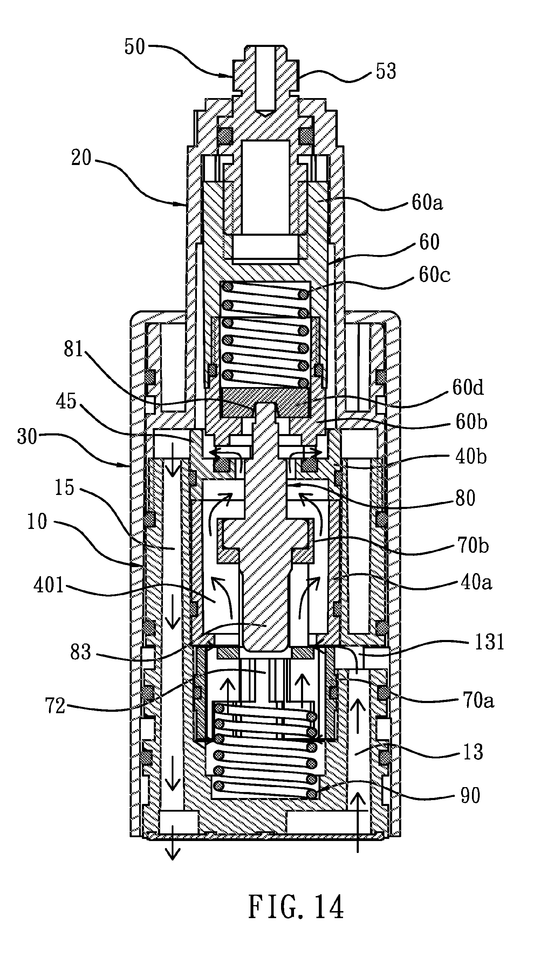

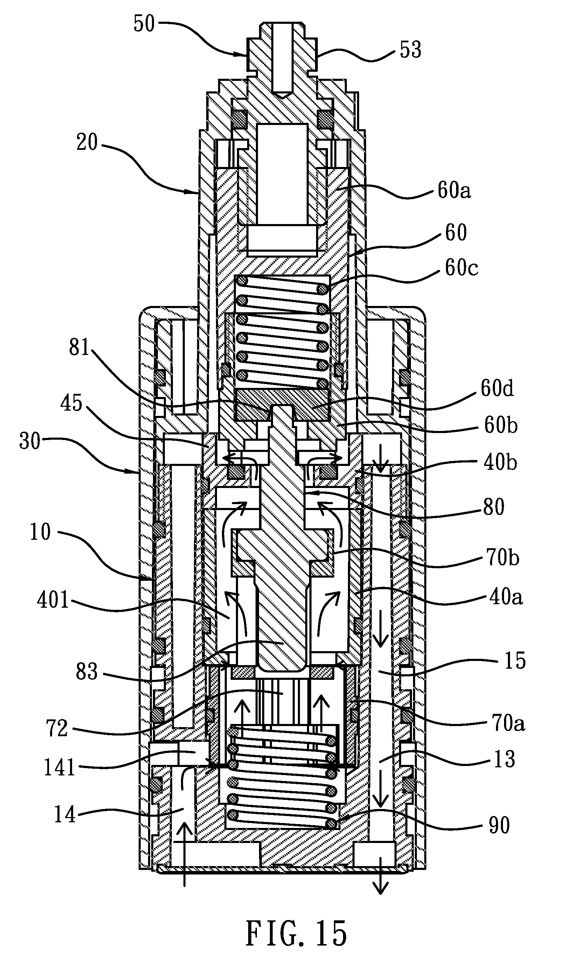

When the rotating component 50 is operated, the watering valve 60 is actuated to move upward so that the second closing portion 66 disengages from the first closing portion 432 to open the watering outlet 602 as shown in Figs. 14, 15, and the inlet valve 70 is pushed upward by the elastic returning element 90, such that the second bottom rim 701 of the enclosure tab 18 disengages from the enclosure tab 18 to open or expand the second intake 704, and the inflow amount of the hot water is decreased, the first intake 703 is decreased due to the second top wall 702 moves upward to close to the first bottom rim 42, thereby lowering inflow amount of the cold water. In other words, when the rotating component 50 is rotated, the watering outlet 602 is opened so that the mixed cold and cold water from the first chamber 401 flows through the watering outlet 602 quickly and flows into the top end of the channel 15 to supply mixed cold and hot water, and the inflow amount of the hot water is increased, the inflow amount of the cold water is decreased to enhance the temperature of the mixed cold and hot water. In contrast, when the rotating component 50 is rotated in an opposite direction, the inflow amount of the hot water is decreased by using the second intake 704, and the inflow amount of the cold water is enhanced by ways of the decreasing first intake 703 until the watering outlet 602 is closed. Therefore, user can adjust watering temperature of mixed cold and cold water by controlling a rotating angle of the rotating component 50, and can close the mixed cold and hot water by rotating the rotating component 50 adversely, thus adjusting water easily.

It is to be noted that as the rotating component 50 is rotated to obtain a certain watering temperature of the mixed cold and hot water, the plunger 81 of the heat sensitive element 80 may not expand and extract completely relative to the temperature of the mixed cold and hot water, but because the plunger 81 can expand and retract simultaneously during temperature change of the mixed cold and hot water, it can adjust expanding and retract range slightly to have an influence to the temperature of the mixed cold and hot water within an acceptable range.

When the temperature or pressure of the cold and the hot waters changes, the temperature of the mixed cold and hot water is influenced, so as to prevent from unstable temperature of the mixed cold and hot water, the heat sensitive element 80 is used to adjust the inflow ratio of the cold and the hot waters automatically to maintain the temperature of the mixed cold and hot water at a stable temperature. For example, as the temperature or pressure of the hot water becomes increased, the plunger 81 of the heat sensitive element 80 expands and pushes the inlet valve 70 to move downward to lower inflow amount of the hot water, thus lower the temperature of the mixed cold and hot water. Also, when the temperature or pressure of the cold water becomes increased, the elastic returning element 90 pushes the inlet valve 70 to move upward, and the plunger 81 is pressed to retract inward to enhance the inflow amount of the cold water so as to increase the temperature of the mixed cold and hot water, thereby keeping the temperature of the mixed cold and hot water at a stable temperature.

The temperature controlled valve core of the present invention can decrease or close the inflow amount of the hot water when the supply of cold water is failed. For example, when the temperature controlled valve core is turned on to supply mixed cold and hot water, if the cold water stops supply, the temperature of the mixed cold and hot water raises at instant, then the sensing portion 83 of the plunger 81 of the heat sensitive element 80 senses the raised temperature of the mixed cold and hot water to expand the plunger 81 quickly so that the inlet valve 70 is pushed by the plunger 81 adversely to move downward to close the second intake 704, obtaining anti-scald safety.

The seat b includes the outer periphery 40a and the locking loop 40b which are plastic injection molded, and the outer periphery 40a and the locking loop 40 are assembled together to prevent from mold making problem.

The cutouts 451 of the seat b is applied to flow the mixed cold and hot water into the channel 15 through the watering outlet 602, any technologies to flow the mixed cold and hot water into the channel 15 are included in this present invention. For instance, the first top cliff 43 of the seat b includes plural pores or paths arranged thereon where is located at a top surface of the watering outlet 602 to flow the mixed cold and hot water to the channel 15 via the pores or paths. In addition, the first top cliff 43 is located at outer surfaces of the pores or the paths so that the lower and the upper housing parts 10, 20 are retained together. A C-shaped retainer can also be used to position the pushing element 60d.

Likewise, a peripheral surface of a top end of the plunger 81 can engage with the bottom end of the pushing element 60d to obtain side limiting functions, and a bottom end of the plunger 81 can engage with the fitting portion 70b to achieve lower support effect.

A size of the first intake 703 is determined by a cross section which is generated when a predetermined distance between a top surface of the inlet valve 70 and the first bottom rim 42 of the seat b is spaced, and a size of the second intake 704 is determined by a cross section which is formed when a predetermined distance between a bottom surface of the inlet valve 70 and the enclosure tab 18 of the lower housing part 10 is spaced, but not be limited by the above-described method. Furthermore, the size of the first intake 703 is also determined by a remained void or an inflow cross section when the inlet valve 70 is covered by the first peripheral fence 12 of the lower housing part 10, e.g., when the inlet valve 70 moves upward, a closed cross section is increased, and an open cross section is decreased. Also, the size of the second intake 703 is also determined by a remained void or an inflow cross section when the inlet valve 70 is covered by the first peripheral fence 12 of the lower housing part 10.

While we have shown and described various embodiments in accordance with the present invention, it is clear to those skilled in the art that further embodiments may be made without departing from the scope of the present invention.

## Claims

1. A temperature controlled valve core comprising
a housing including a receiving space defined therein, and including a first tunnel to flow cold water axially extending on a first peripheral fence, including a second tunnel to flow hot water, and a channel to flow mixed cold and hot water; the first tunnel extending upward from a bottom end of the housing toward a first height to communicate with the receiving space; the second tunnel extending upward from the bottom end of the housing toward a second height; the first height is higher than the second height; the channel extending upward from the bottom end of the housing to be over the first height so as to communicate with the receiving space;
a seat received in a predetermined position of the receiving space of the housing, and including a first chamber to receive mixed cold and hot water arranged therein to communicate with the channel of the lower housing part;
an adjusting assembly installed between the housing and the seat, and including:
a rotating component limited to rotate on a top end of the housing;
a watering valve actuated by the rotating component to move upward and downward, and having a resilient protecting element installed therein, and having a pushing element pushed downward by the resilient protecting element; the watering valve being actuated to move downward so as to close a watering outlet, and when the watering valve is actuated to move upward, the watering outlet is opened;
an inlet valve received at a predetermined portion of the receiving space of the housing, and having a second chamber to flow hot water arranged on a lower side thereof to communicate with the first chamber of the seat, and to communicate with a top end of the second tunnel via a second intake so as to flow hot water, and to communicate with a top end of the first tunnel via a first intake so as to flow cold water; the inlet valve allowing to be actuated to move upward and downward, when the inlet valve is pushed to move downward, the second intake is closed, and the first intake is opened; when the inlet valve is pushed to move upward, the second intake is opened so that the first intake becomes decreased until it is closed completely; the inlet valve is moved upward and downward to adjust a mixing ratio of cold and hot waters from the first intake and the second intake, and the cold and the hot waters are mixed in a top end of the second chamber to flow toward the fist chamber;
a heat sensitive element engaging with the inlet valve and the pushing element of the watering valve respectively so as to transmit an axial pushing force from the pushing element to the inlet valve, so that the heat sensitive element moves downward to sense a temperature of the mixed cold and hot water which flows to the first chamber, and the heat sensitive element automatically expands to push the inlet valve to move downward based on a sensed temperature, or the heat sensitive element is forced to retract;
an elastic returning element engaging with a bottom end of the inlet valve and the receiving space of the housing so that when the watering valve is actuated to move upward, and the inlet valve is pushed to move upward to push the heat sensitive element to retract, and a resilient coefficient of the elastic returning element being larger than that of the resilient protecting element.

2. The temperature controlled valve core as claimed in claim 1, wherein the housing further includes a lower housing part, an upper housing part, and a casing; and the lower housing part includes the first tunnel to flow the cold water axially extending on the first peripheral fence thereof, includes the second tunnel to flow the hot water, and includes the channel to flow the mixed cold and hot water, the channel extends upward from a bottom end of the lower housing pat to a top end thereof; the upper housing part closes the top end of the lower housing part, and retains the seat between the upper housing part and the lower housing part, the housing serves to close the lower housing part and a bottom end of the upper housing part.

3. The temperature controlled valve core as claimed in claim 2, wherein the first tunnel and the second tunnel of the lower housing part communicate with the first room through first and second orifices, and the first and the second orifices are closed by the housing.

4. The temperature controlled valve core as claimed in claim 1, wherein the watering valve further includes an actuating member and a seal sleeve, both of which are engaged with each other, and between the actuating member and the seal sleeve is defined a cavity so that the resilient protecting element and the pushing element are installed on upper and lower sides of the cavity respectively; the actuating member screws with the rotating component and is limited to rotate in the receiving space of the housing so that the actuating member moves upward and downward when the rotating component rotates; the seal sleeve includes a second bore fixed on a bottom end thereof so as to abut against the pushing element when a top end of the heat sensitive element passes through.

5. The temperature controlled valve core as claimed in claim 1, wherein the watering valve includes a second closing portion disposed on a bottom end thereof, and includes a first top cliff mounted on a top end thereof, the first top cliff includes a first bore disposed on a central portion thereof, between the first bore and the heat sensitive element is spaced a suitable distance to form a first slit so as to communicate with the first chamber and a top end of the channel, and the first top cliff includes a first closing portion fixed on a top surface of the first bore so as to be spaced a predetermined distance apart from a second closing portion of the bottom end of the watering valve to form the watering outlet, and the watering outlet is closed by the second closing portion.

6. The temperature controlled valve core as claimed in claim 5, wherein the seat includes a plurality of biasing members extending upward around a top end of the first top cliff, and between each two biasing members is defined a cutout to communicate with the channel, and to communicate with the first slit through the watering outlet.

7. The temperature controlled valve core as claimed in claim 5, wherein the first top cliff of the seat includes plural pores arranged thereon where is located at a top surface of the watering outlet to flow the mixed cold and hot water to the channel via the pores.

8. The temperature controlled valve core as claimed in claim 1, wherein the inlet valve includes a third closing portion and a fitting portion, and includes a stepped portion defined between the third closing portion and the fitting portion; the third closing portion is received in the lower housing part where is located at a lower area of the first room of the seat, and includes a second chamber to receive hot water formed on a bottom end thereof, the second chamber includes a central hole and a plurality of side bores disposed on a center and a top surface thereof respectively; the fitting portion is received in the first chamber of the seat, and includes a number of reinforced ribs extending upward from a top surface between the central hole and the side bores, and between each two abutting reinforced ribs is defined a fifth orifice, and among the reinforce ribs is defined a second room; the fitting portion includes a holder connected on a top end thereof, and the holder includes a dent disposed on a top end thereof, the dent includes a gap mounted on a center of a bottom end thereof to communicate with the second room; the heat sensitive element includes a plunger to expand and retract axially, and includes an annular projection fixed on a middle section thereof, and includes a heat sensing portion secured on a bottom end thereof, the annular projection is positioned in the sent, and the sensing portion inserts through the gap to be received in the second room, and a bottom end of the sensing portion is inserted to the central hole slightly to generate a second slit; the second chamber communicates with the first chamber via the side bores and the second slit of the central hole.

9. The temperature controlled valve core as claimed in claim 8, wherein the second chamber includes a number of guiding wings extending from an inner surface thereof so that between each two guiding wings is defined a passage to communicate with the side bores.

10. The temperature controlled valve core as claimed in claim 9, wherein the guiding wing includes a fourth positioning notch arranged on a bottom end thereof, so that a top end of the elastic returning element engages with the fourth positioning notch.

11. The temperature controlled valve core as claimed in claim 8, wherein the first intake is determined by a top end of the first closing portion where is located between the stepped portion of the side bores and a bottom end of the seat, and the first intake is located at the first and the second orifices of the first tunnel.

12. The temperature controlled valve core as claimed in claim 8, wherein the second intake is determined by a void between a bottom end of the third closing portion and the housing, and the second intake is located at the third and the fourth orifices of the second tunnel.

13. The temperature controlled valve core as claimed in claim 1, wherein a size of the first intake is determined by a remained void when the inlet valve is covered by the first peripheral fence of the lower housing part.

14. The temperature controlled valve core as claimed in claim 1, wherein a size of the second intake is determined by a remained void when the inlet valve is covered by the first peripheral fence of the lower housing part.

15. The temperature controlled valve core as claimed in claim 1, wherein the resilient protecting element is a compression spring.

16. The temperature controlled valve core as claimed in claim 1, wherein the heat sensitive element includes the plunger mounted on a top end thereof, and includes a heat sensing portion secured on a bottom end thereof to engage with the inlet valve.
